# EUROPEAN PATENT APPLICATION

(11) **EP 2 323 242 A1**
(43) Date of publication of application: **18.05.2011**
(21) Application number: 09014241.5
(22) Date of filing: 13.11.2009
(51) Int. Cl.: H02K 7/18, B62J 6/06, B62J 6/20, H02K 1/14

(54) **Generator for a bicycle wheel**

(71) Applicant: ABUS August Bremicker Söhne KG, 58300 Wetter-Volmarstein (DE)
(72) Inventor: Carlsen, Steen, DK-8000 Aarhus C. (DK); Cordsen, Peter, DK-8000 Aarhus C. (DK)
(74) Representative: Manitz, Finsterwald & Partner GbR

(57) **Abstract**

A generator for a bicycle wheel comprises a core and a plurality of rotating yokes. The core has a first outer leg, a middle leg and a second outer leg, wherein an electric coil surrounds the middle leg. The core comprises at least one permanent magnet which is configured such that the first outer leg and the second outer leg of the core are magnetized in opposing directions. The yokes have a length which corresponds to the distance between the middle leg and one of the outer legs of the core. The yokes are arranged such that they pass subsequently along the first outer leg, the middle leg and the second outer leg of the core when the yokes are rotating, so that an alternating electric voltage is induced in the coil while a respective one of the yokes passes along the core.

## Description

The present invention relates to a generator for a bicycle wheel, particularly for generating electric power for a lighting device. Such generators known as bottle dynamos (cooperating with the tire sidewall) and hub dynamos (built into the front wheel hub) are generally working as an altemating current generator. It is also possible to use a solenoid attached to the bicycle fork or frame which cooperates with a number of permanent magnets attached to the spokes of one of the bicycle wheels. In such arrangement an electric voltage is induced in the solenoid when the permanent magnets pass by the solenoid and change the magnetic flux within the solenoid. While this kind of generator is characterized by a simple construction and a high reliability, it suffers from an insufficient power output. In order to supply enough electric power for a permanent (and not only pulsed) lighting, a large number of permanent magnets is required, making this solution disadvantageously expensive.

It is therefore an object of the present invention to provide for a generator for a bicycle wheel which has a simple and inexpensive construction and supplies a high power output.

This object is satisfied by a generator having the features of claim 1.

Such generator comprises a core and a plurality of rotating yokes. Typically, the core is attached to a fork or a frame part of the bicycle, whereas the yokes are attached to the associated wheel of the bicycle and rotate therewith.

The core has at least a first outer leg, a middle leg and a second outer leg, wherein an electric coil (i.e. a winding) surrounds the middle leg, thereby forming a solenoid arrangement. The core further comprises (integrally or as a separate part) at least one permanent magnet which is configured such that the first outer leg and the second outer leg of the core are magnetized in opposing directions.

The yokes have a length (with respect to their direction of rotation) which corresponds only to the distance between the middle leg and one of said outer legs of the core, i.e. the yokes are shorter than the core (distance between the two outer legs). The yokes are arranged such that they pass along the first outer leg, then the middle leg and then the second outer leg of the core when the yokes are rotating together with the wheel. As a result of this arrangement, an alternating electric voltage is induced in the coil surrounding the middle leg, while the yokes are rotating relative to the core.

In other words, said middle leg of the core (which carries the coil) together with said first outer leg and said second outer leg, respectively, forms a first and a second magnetic circuit. These two magnetic circuits are magnetized in opposing directions, as defined by said at least one permanent magnet. The two magnetic circuits are, however, only closed alternately by a respective yoke when the yokes pass along the core while the wheel is rotating. Since the yokes are relatively short as compared to the distance between the two outer legs of the core, each yoke can only close the first or the second magnetic circuit at a time. Consequently when a yoke passes along the core, it first closes the first magnetic circuit (effecting a magnetic flux in the coil in a first sense) and afterwards closes the second magnetic circuit (effecting a magnetic flux in the coil in an opposing second sense). As a result, each yoke passing along the core induces two opposing voltages in the coil, thereby effecting a particularly high voltage amplitude.

It is therefore an advantage of the generator that a high electric power output can be attained. Also, the generator is inexpensive since it uses a small number of permanent magnets for the coil (preferably only two permanent magnets, as explained below). The yokes associated with the rotating wheel may instead be made from a magnetically mild ferromagnetic material (i.e. from an inexpensive common magnetizable material, e.g. mild steel).

Advantageous embodiments of the generator are explained hereafter and in the dependent claims.

In a particularly advantageous embodiment, the core and the yokes are arranged in a substantially radial orientation (+/- 10°) relative to one another with respect to the axis of rotation of the yokes. In other words, both the core and the yokes are substantially arranged within the plane of rotation of the yokes. In order to maximize the magnetic flux created in the coil by the passing yokes, the air gap provided between the core and the rotating yokes shall be as small as possible. While for various reasons it is preferable to attach the yokes to or near the rim of the bicycle wheel, it has proven disadvantageous to arrange the core sideways of the yokes (i.e. oriented in an axial direction relative to the yokes with respect to the axis of rotation of the yokes), since bicycle wheels tend to move sideways during the course of one rotation due to inevitable imperfections of the rim and the spokes. In such arrangement the air gap formed between the core and the yokes would therefore temporarily increase undesirably.

If, however, the core and the yokes are oriented in a radial direction relative to one another, this problem is avoided since the deviation of the radius of a bicycle wheel along its circumference is relatively small as compared to said imperfections in the axial direction. Accordingly, in this embodiment an advantageously small air gap can be kept throughout the complete rotation of the wheel. This advantage is particularly important for the present generator, since the generator does not use rotating permanent magnets but only rotating yokes which close a respective magnetic circuit, as explained above.

In another advantageous embodiment, the core and the yokes are oriented relative to one another in a direction which is inclined at an angle having a value between 10° and 45° with respect to the plane of rotation of the yokes. In this embodiment, the advantage of maintaining a small air gap according to the aforementioned embodiment is to some extent preserved, while at the same time the mounting of the core and the yokes at the bicycle and the wheel, respectively, may be facilitated.

In a preferred embodiment the first outer leg, the middle leg and the second outer leg of the core are spaced apart from one another (corresponding to the length of a respective yoke), and they are oriented substantially parallel to one another. If the core and the yokes are arranged within the plane of rotation of the yokes as explained above, each of the legs of the core can be oriented in a radial direction with respect to the axis of rotation of the yokes. In this case the legs are not exactly parallel to one another.

In another preferred embodiment, the first outer leg, the middle leg and the second outer leg of the core are connected by a connecting section, particularly at a respective end of their legs opposing the yokes. Such connecting section therefore guides the magnetic field between the respective two adjacent legs. In this case, when the legs are parallel to one another, the core is substantially E-shaped.

Preferably, the first outer leg, the middle leg and the second outer leg of the core are made from a ferromagnetic material and from said at least one permanent magnet. The ferromagnetic part of the core preferably is made from a stack of thin, electrically insulated layers of a ferromagnetic material, e.g. mild steel. Alternatively, it is in principle possible to make the whole core from said permanent magnet, i.e. without an additional ferromagnetic material part.

Said at least one permanent magnet can be made from any known ferromagnetic material having a high coercive field strength and a high magnetic remanence.

In a preferred embodiment, the first outer leg of the core comprises a first permanent magnet having a first direction of magnetization, and the second outer leg of the core comprises a second permanent magnet having a second direction of magnetization which is opposed to said first direction. In other words, the core is provided with two permanent magnets each of which is associated with a respective one of the two outer legs. For example, the respective permanent magnet can be attached to the free end of the associated outer leg of the core, or the respective outer leg of the core can be made completely from the permanent magnet.

Alternatively it is also possible, for example, to use a single permanent magnet which forms said connecting section of the core, i.e. which extends from the first outer leg to the second outer leg of the core, thereby effecting opposing directions of the respective magnetization of the two outer legs. In another alternative embodiment two separate permanent magnets can be provided within the connecting section of the core, namely on the two sides of the middle leg.

In order to have a particularly simple and inexpensive construction, the core preferably consists only of said first outer leg, said middle leg and said second outer leg together with said connecting section, wherein a single coil is provided at the core, namely at the middle leg. Alternatively, the core may comprise more than said three legs and/or more than one coil. Particularly, two or more coils may be provided in a distance which corresponds to the distance between one or several of the yokes, the coils thereby at a given time cooperating with different of said yokes.

A mounting device may be provided at the core for attaching the core (together with the coil and the associated electric connection means) to a fork or a frame part of the bicycle. Such mounting device may, for example, comprise a bracket, a clamp or an angle plate. The core (together with the coil) preferably is embedded in a non-ferromagnetic material (for example a polymer).

The yokes preferably are arranged along a circle around the axis of rotation of the yokes, i.e. around the axis of rotation of the associated bicycle wheel. The yokes preferably are spaced apart from one another, particularly by a distance which corresponds to the distance between the middle leg and one of said outer legs of the core.

The yokes may have a rectilinear or a curvilinear shape. In the latter case the radius of curvature corresponds to the distance between the respective yoke and its axis of rotation, i.e. to the rotation radius.

The yokes preferably are made from a ferromagnetic material. In order to avoid eddy currents the yokes preferably are made from a respective stack of thin, electrically insulated ferromagnetic layers (e.g. mild steel).

In an advantageous embodiment the yokes are arranged at a radially outer position of the wheel, particularly at the rim or the tire of the wheel or at the spokes near the rim of the wheel. Such radially outer arrangement of the yokes allows to provide the wheel with a maximum number of yokes (having a given length in the circumferential direction of the wheel), which enhances the efficiency of the generator.

In a preferred embodiment, the yokes are provided with a carrier device for attaching the yokes to the bicycle wheel. For example, said carrier device can be adapted to attach the respective yoke to the spokes, the rim or the tire of the wheel.

A common carrier device can be provided for all yokes, for example forming a wreath of yokes extending in a circle around the axis of rotation of the wheel. In this case the carrier device (together with the yokes) can be attached directly in or to the wheel. Alternatively, an individual carrier device can be provided for each yoke or for a respective plurality of yokes. In this case the carrier devices can also be adapted to be attached to one another in sequence.

Preferably, said carrier device is made from a non-ferromagnetic material in which the respective yoke is embedded (for example a polymer).

In an advantageous embodiment the generator comprises a further core of the kind explained above (particularly being provided with a further coil), wherein both cores preferably cooperate with the same plurality of yokes, thereby forming two sources of electric voltage. Preferably, the two cores are arranged on opposing sides of the plane of rotation of the yokes. Alternatively, the two cores can be arranged next to each other on the same side or within the plane of rotation of the yokes.

In another embodiment said coil is connected to an evaluation circuit which is adapted to evaluate the voltage pulses induced in the coil in order to determine a rotational speed of the rotating yokes. The evaluation circuit creates a control signal when the rotational speed reaches (i.e. exceeds or falls below) a predetermined threshold. Said control signal may be used as an ON signal or OFF signal within the generator or for an external device, for example to activate an accumulator support mode of the generator when the bicycle speed becomes to low for directly supplying enough electric energy from the coil to a lighting device.

Similarly, said coil can be connected to an evaluation circuit which evaluates the voltage pulses induced in the coil in order to determine a deceleration rate of the rotating yokes. Such deceleration rate can for example be determined by measuring the respective rate of voltage pulses (i.e. number of voltage pulses per time unit) at two different points in time. The evaluation circuit creates a brake light control signal when the deceleration rate reaches (i.e. exceeds) a predetermined threshold. Such brake light control signal can be used to activate a brake light provided at the rear of the bicycle in order to give a warning of a braking maneuver.

In yet another embodiment said coil is connected to an energy source and a control device, wherein the control device is adapted to supply electric energy from the energy source to the coil such that the yokes are actively driven by a varying magnetic field created by the coil. In other words the control device causes the coil to create magnetic fields in the core in a synchronized manner such that the yokes are driven to a rotating movement, thereby forming an electric drive of the associated bicycle wheel.

The invention will now be explained in an exemplary manner with respect to the drawings.
- Figs. 1 to 3: show a generator comprising a core and a plurality of yokes, the yokes being arranged in different positions relative to the core.
- Figs. 4a and 4b: show a front sectional view of a bicycle wheel provided with a generator and a detailed view thereof, according to a first embodiment.
- Figs. 5a and 5b: show a front sectional view of a bicycle wheel provided with a generator and a detailed view thereof, according to a second embodiment.
- Fig. 6: shows a front sectional view of a bicycle wheel provided with a generator, according to a third embodiment.
- Fig. 7: shows a front sectional view of a bicycle wheel provided with a generator, according to a fourth embodiment.

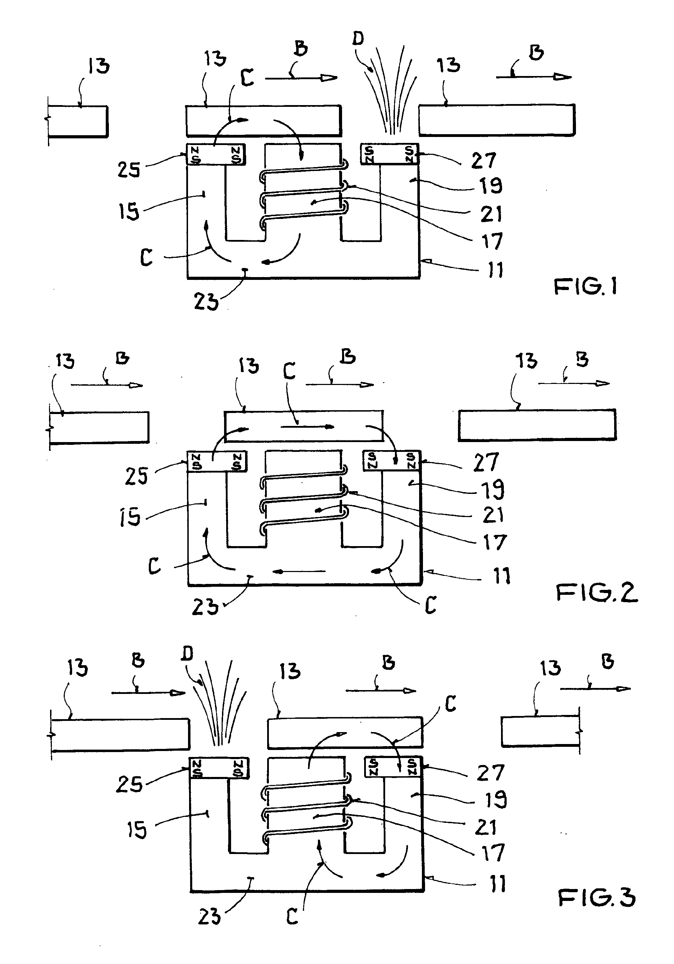

Figs. 1 to 3 show a generator for a bicycle wheel provided for generating electric energy to be supplied, for example, to a lighting device of the bicycle. The generator comprises an E-shaped core 11 and a plurality of yokes 13 which move together with the bicycle wheel (not shown). The core 11 comprises a first outer leg 15, a middle leg 17 and a second outer leg 19, wherein an electric coil 21 surrounds the middle leg 17. The legs 15, 17, 19 are spaced apart from one another and are oriented parallel to one another. A connecting section 23 of the core 11 connects the legs 15, 17, 19 such that each leg 15, 17, 19 has a free end facing the yokes 13. Attached to the free end of the first outer leg 15 is a first permanent magnet 25. Attached to the free end of the second outer leg 19 is a second permanent magnet 27. The two permanent magnets 25, 27 are formed separately and are arranged such that the two outer legs 15, 19 are magnetized in opposing directions. The legs 15, 17, 19 and the connecting section 23 of the core 11 are formed together as a single stack of insulated layers of mild steel.

The yokes 13 have a respective length which substantially corresponds to the distance between the middle leg 17 and one of the outer legs 15, 19 of the core 11. Also the distance between two adjacent yokes 13 substantially corresponds to the distance between the middle leg 17 and one of the outer legs 15, 19 of the core 11. During the rotation of the wheel the yokes 13 rotate around the axis A (not shown in Figs. 1 to 3) of the wheel. The yokes 13 thereby move in a direction B along the core 11 such that a respective one of the yokes 13 passes along the first outer leg 15, then the middle leg 17 and then the second outer leg 19. Different stages of this movement are shown in Figs. 1 to 3.

While a single one of the yokes 13 passes along the core 11, an alternating electric voltage is induced in the coil 21, as will be explained in the following.

Fig. 1 shows the situation when one of the yokes 13 is arranged between the free end of the first outer leg 15 (i.e. the first permanent magnet 25) and the middle leg 17 of the core 11, with only a small air gap remaining between the yoke 13 and the core 11. The yoke 13 therefore closes a magnetic circuit which extends from the middle leg 17 carrying the coil 21 via a part of the connection section 23 and the first outer leg 15 to the yoke 13, and from the yoke 13 back to the middle leg 17, as can be seen from the arrows C indicating the direction of the magnetic field. When the magnetic field builds up within the coil 21 as shown in Fig. 1, a first electric voltage is induced in the coil 21 which can be used to fill an electric accumulator or to directly supply electric energy to a lighting device. At this time the second outer leg 19 of the core 11 is not active since the free end of the second outer leg 19 faces the gap between two adjacent yokes 13 and therefore only creates a magnetic stray field D.

Fig. 2 shows an intermediate stage in which the respective yoke 13 faces the middle leg 17 of the core 11 and therefore nearly extends from the first outer leg 15 to the second outer leg 19. A weak magnetic circuit is formed between the two outer legs 15, 19 (via the connecting section 23 and the yoke 13). In the middle leg 17 (and therefore in the coil 21), however, the magnetic field has broken down.

When the respective yoke 13 moves on until it extends between the middle leg 17 and the second outer leg 19 of the core 11, as shown in Fig. 3, a second magnetic circuit is closed, which extends from the middle leg 17 via the yoke 13 to the second outer leg 19, and from there via the connecting section 23 back to the middle leg 17. When the associated magnetic field builds up in the coil 21, its direction C is opposed to the direction of the magnetic field created within the coil 21 according to Fig. 1. Therefore, an electric voltage is now induced in the coil 21 having a polarity which is opposed to the polarity of the electric voltage induced in the situation according to Fig. 1.

Consequently, each time a yoke 13 completely passes the core 11 an alternating electric voltage is generated by the coil 21. The generator therefore has an advantageously high efficiency.

The generator also has a simple construction since only the two permanent magnets 25, 27 are required for the core 11, whereas the yokes 13 can be made from a magnetically mild ferromagnetic material. Since the yokes 13 have a simple rectilinear shape, it is also inexpensive to make the yokes 13 from stacks of electrically insulated layers. Therefore, eddy currents may be prevented and the efficiency of the generator may be increased at low expense. The same applies to the core 11.

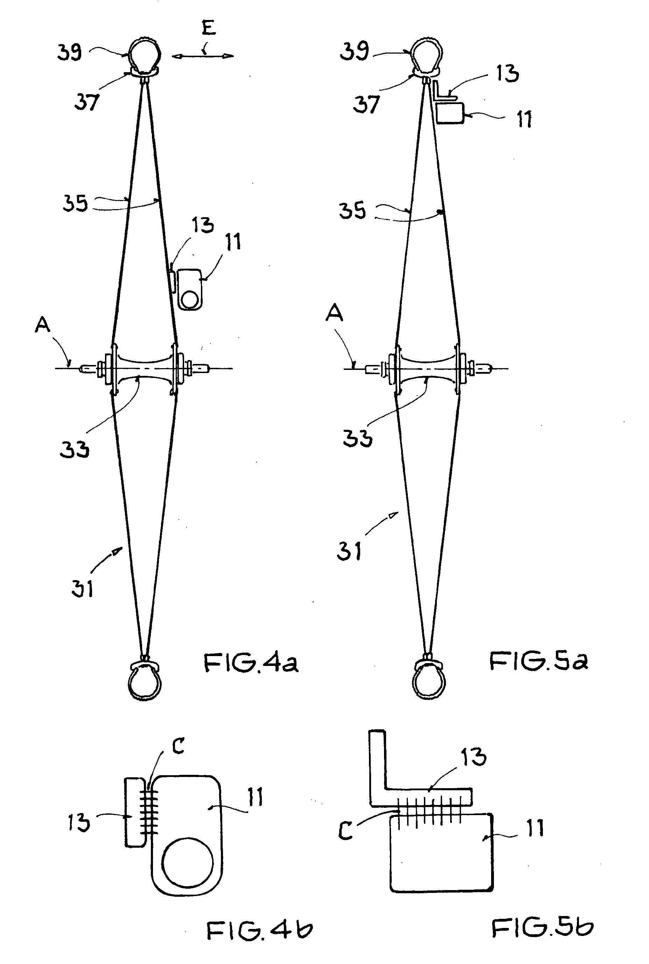

Fig. 4a shows a first embodiment of the generator when attached to a bicycle wheel 31 in a schematic front sectional view. The bicycle wheel 31 comprises a hub 33, a plurality of spokes 35, a rim 37 and a tire 39. The yokes 13 can be attached, for example, to the spokes 35. To this end the yokes 13 can be provided with a carrier device (either a common carrier device for all yokes 13 or individual carrier devices). Particularly, the yokes 13 can be embedded in a non-ferromagnetic material in order to connect the yokes 13 to one another and/or to allow for mounting of the yokes 13 to the bicycle wheel 31.

The core 11 (together with the coil, the permanent magnet etc.) is attached to a part of the bicycle which is stationary with respect to the rotating wheel 31, for example to the bicycle fork or a frame part (not shown).

Fig. 4b shows a detailed view of the generator according to Fig. 4a. Since the core 11 is arranged sideways to the plane of rotation of the yokes 13, the direction C of the magnetic field created between the core 11 and the respective yoke 13 extends perpendicular to the plane of rotation of the yokes 13, i.e. parallel to the axis A of rotation of the wheel 31 and the yokes 13, respectively.

The arrangement of the generator according to Figs. 4a and 4b has the advantage of an easy mounting to the bicycle. There is, however, a significant drawback related to the inherent imperfections of a bicycle wheel 31. During the course of one rotation a bicycle wheel 31 tends to show an oscillating axial deviation E. As a consequence the air gap provided between the core 11 and the yokes 13 (see Fig. 4b) significantly varies during the course of one rotation, which disadvantageously reduces the efficiency of the generator.

Figs. 5a and 5b show an improved second embodiment in corresponding views. In this embodiment the core 11 and the yokes 13 are arranged in a radial orientation relative to one another with respect to the axis A of rotation of the yokes 13, i.e. both the core 11 and the yokes 13 are arranged within the plane of rotation of the yokes 13. Accordingly, the direction C of the magnetic field created between the core 11 and the yokes 13 extends in a radial direction with respect to the axis A of rotation of the yokes 13. Such arrangement results in a better efficiency of the generator since the typical imperfections of a bicycle wheel 31 in the radial direction are much smaller than the axial deviations E explained in connection with Figs. 4a and 4b. Therefore, a minimum air gap can be maintained during the complete course of rotation of the bicycle wheel 31.

The yokes 13 can be attached (either by means of a common carrier device or individually) to the spokes 35, to the rim 37 or to the tire 39 of the bicycle wheel 31. The core 11 can be attached to a stationary part of the bicycle.

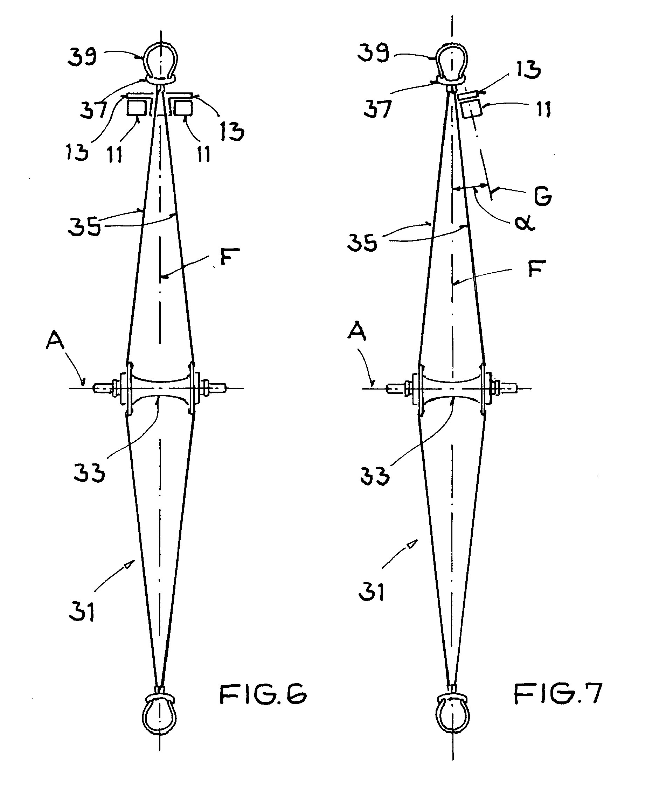

Fig. 6 shows an embodiment in which the generator comprises two cores 11 cooperating with a respective set of yokes 13. The two cores 11 are arranged on opposite sides of the middle plane F of the bicycle wheel 31 (which extends orthogonally to the axis A of rotation). Advantageously, the two sets of yokes 13 are connected to the spokes 35 and to one another by a common carrier device which preferably extends in a complete circle around the axis A of rotation of the wheel 31. In an advantageous variant of this embodiment the two cores 11 can cooperate with a common (single) plurality of yokes 13. The two cores 11 may be arranged offset relative to one another in a circumferential direction to prevent their magnetic fields from interfering.

Fig. 7 shows an embodiment in which the yokes 13 are attached to the rim 37 of the bicycle wheel 31. The core 11 and the respective yoke 13 are oriented relative to one another in a direction G which is inclined at an angle α of 15° with respect to the plane of rotation of the yokes 13 (or with respect to the middle plane F of the bicycle wheel 31). Similarly as in Figs. 5a and 5b a small air gap can be maintained between the core 11 and the yokes 13 during the complete course of rotation of the bicycle wheel 31, while at the same time the mounting of the core 11 and the yokes 11 to the bicycle and the wheel 31, respectively, may be facilitated.

### Reference Numerals

- 11: core
- 13: yoke
- 15: first outer leg
- 17: middle leg
- 19: second outer leg
- 21: coil
- 23: connecting section
- 25: first permanent magnet
- 27: second permanent magnet
- 31: bicycle wheel
- 33: hub
- 35: spoke
- 37: rim
- 39: tire

- A: axis of rotation
- B: moving direction of yokes
- C: direction of magnetic field
- D: magnetic stray field
- E: axial deviation
- F: middle plane of the bicycle wheel
- G: direction of orientation

## Claims

1. Generator for a bicycle wheel (31), comprising a core (11) and a plurality of rotating yokes (13),
wherein the core (11) has a first outer leg (15), a middle leg (17) and a second outer leg (19) , wherein an electric coil (21) surrounds the middle leg, wherein the core comprises at least one permanent magnet (25, 27) which is configured such that the first outer leg (15) and the second outer leg (19) of the core are magnetized in opposing directions, and
wherein the yokes (13) have a length which corresponds to the distance between the middle leg (17) and one of the outer legs (15, 19) of the core, wherein the yokes (13) are arranged such that they pass subsequently along the first outer leg (15), the middle leg (17) and the second outer leg (19) of the core (11) when the yokes are rotating, so that an alternating electric voltage is induced in the coil (21) while a respective one of the yokes passes along the core.

2. Generator according to claim 1,
wherein the core (11) and the yokes (13) are arranged in a radial orientation relative to one another with respect to the axis of rotation (A) of the yokes (13), or
wherein the core (11) and the yokes (13) are oriented relative to one another in a direction (G) which is inclined at an angle (α) between 10° and 45° with respect to the plane of rotation of the yokes (13).

3. Generator according to claim 1 or 2,
wherein the first outer leg (15), the middle leg (17) and the second outer leg (19) of the core (11) are spaced apart from one another and are oriented substantially parallel to one another,
and/or
wherein the first outer leg (15), the middle leg (17) and the second outer leg (19) of the core (11) are connected by a connecting section (23).

4. Generator according to any one of the preceding claims,
wherein the first outer leg (15), the middle leg (17) and the second outer leg (19) of the core (11) are made from a ferromagnetic material and said at least one permanent magnet (25, 27).

5. Generator according to any one of the preceding claims,
wherein the first outer leg (15) of the core comprises a first permanent magnet (25) having a first direction of magnetization, and wherein the second outer leg (19) of the core comprises a second permanent magnet (27) having a second direction of magnetization being opposed to said first direction.

6. Generator according to any one of the preceding claims,
wherein the core is substantially E-shaped, and wherein a single coil (21) is provided at the core.

7. Generator according to any one of the preceding claims,
wherein a mounting device is provided at the core (11) for attaching the core to a fork or a frame part of a bicycle.

8. Generator according to any one of the preceding claims,
wherein the yokes (13) are arranged along a circle, wherein the yokes are spaced apart from one another,
and/or
wherein the yokes (13) are arranged at a radially outer position of the bicycle wheel (31).

9. Generator according to any one of the preceding claims,
wherein the yokes (13) are rectilinear, or wherein the yokes (13) are curvilinear having a radius of curvature which corresponds to the distance between the respective yoke (13) and its axis of rotation (A).

10. Generator according to any one of the preceding claims,
wherein the yokes (13) are made from a not permanently magnetized ferromagnetic material.

11. Generator according to any one of the preceding claims,
wherein the yokes (13) are provided with a carrier device for attaching the yokes to the bicycle wheel (31).

12. Generator according to any one of the preceding claims,
wherein a common carrier device is provided for all yokes (13), or
wherein an individual carrier device is provided for each yoke (13).

13. Generator according to claim 11 or 12,
wherein the carrier device is made from a non-ferromagnetic material in which the respective yoke (13) is embedded.

14. Generator according to any one of the preceding claims,
wherein the generator comprises at least one further core (11) being provided with a respective further coil (21), wherein the cores (11) cooperate with a respective plurality of yokes (13) or with the same plurality of yokes (13), and wherein the cores preferably are arranged on opposing sides of the plane of rotation of the yokes.

15. Generator according to any one of the preceding claims,
wherein the coil (21) is connected to an evaluation circuit which is adapted to evaluate the voltage pulses induced in the coil in order to determine a rotational speed of the rotating yokes (13), and to create a control signal when the rotational speed reaches a predetermined threshold,
and/or
wherein the coil (21) is connected to an evaluation circuit which is adapted to evaluate the voltage pulses induced in the coil in order to determine a deceleration rate of the rotating yokes (13), and to create a brake light control signal when the deceleration rate reaches a predetermined threshold,
and/or
wherein the coil (21) is connected to an energy source and a control device, wherein the control devices is adapted to supply electric energy from the energy source to the coil such that the yokes (13) are driven by a varying magnetic field created by the coil.
